# EUROPEAN PATENT SPECIFICATION

(11) **EP 0 761 087 B1**
(45) Date of publication and mention of the grant of the patent: **10.04.2002**
(21) Application number: 96202281.0
(22) Date of filing: 13.08.1996
(51) Int. Cl.: A01F 25/20

(54) **Hydraulic system for a silage cutter and method for driving a cutting board**
Hydrauliksystem für einen Silofutterschneider und Verfahren zum Antrieb einer Schneidplatte
Système hydraulique pour dispositif de coupe pour désileuse et méthode de commande d'une planche à couteaux

(30) Priority: 24.08.1995 NL 1001037
(43) Date of publication of application: 12.03.1997
(73) Proprietor: Trioliet Mullos B.V., 7581 HE Losser (NL)
(72) Inventor: Van der Plas, Nicolaas, 7576 WB Oldenzaal (NL)
(74) Representative: de Vries, Johannes Hendrik Fokke

(56) References cited:
- DE-A- 3 615 863
- DE-A- 3 707 304
- DE-A- 3 730 677
- DE-A- 3 929 651
- DE-U- 9 200 405

## Description

The invention relates to a silage cutter with hydraulic drive and provided with a cutting board comprising a main blade which is capable of reciprocating movement along the bottom edge and a side board which extends substantially perpendicularly to the cutting board on at least one side, said side board comprising a side blade which is capable of reciprocating movement along the bottom edge, whereby said main blade is driven by means of a hydraulic cylinder assembly, which is provided with a pump chamber, by means of which pump chamber hydraulic fluid is pumped to a hydraulic side cylinder for driving the side blade.

DE-A-3730677 discloses such silage cutter whereby the hydraulic fluid to the hydraulic cylinder assembly for driving the main blade is supplied by pump chambers of two hydraulic cylinders for driving the side blades and whereby the pump chamber of the hydraulic cylinder assembly of the main blade has the same operative cross-sectional area as the cylinder assembly itself. DE-A-3929651 also discloses a silage cutter whereby the hydraulic cylinder assembly for driving the main blade is driven through the hydraulic cylinders for driving the side blades.

The reciprocating blade may be a saw which cuts the silage by means of a sawing movement, the reciprocating blade may also co-operate with a stationary blade, whereby both blades are provided with teeth, so that in fact a shearing action between the teeth of the blades is obtained. When teeth of this type are used it is preferred to use large teeth to ensure sufficient strength and resistance to wear. In that case, however, a relatively large stroke of the blade is required in order to effect the shearing action, because at least the distance between two teeth must be bridged. The cutting board may furthermore be provided with a side board extending perpendicularly to the cutting board, it may also be provided with two side boards, however, namely on either side of the cutting board.

A silage cutter of this type may be suspended in the three-point lift of a tractor, the silage cutter may also be provided on a trailer which is moved by a tractor. In both cases the hydraulic power for the hydraulic system of the silage cutter is usually supplied by the tractor, which is to that end provided with hydraulic pump means. There is a limit to the amount of hydraulic energy which the tractor can deliver, of course, and because it requires a great deal of energy to drive a silage cutter, it is essential to utilize the hydraulic energy delivered by the tractor in the most efficient manner.

It is important, therefore, to keep the hydraulic drive system of the silage cutter simple and effective, and to avoid the use of components which work less efficiently as much as possible. Especially pressure regulators and components which distribute a hydraulic fluid flow to various circuits are to be considered in this case.

In order to reduce the number of hydraulic components, constructions are known wherein the side blade or the side blades are driven by being mechanically coupled to the main blade. In practice is has become apparent, however, that a construction of this kind is much more vulnerable than a construction wherein the side blade or the side blades are driven hydraulically.

Besides the driving of the blade or the blades also the downward movement of the cutting board through the silage usually requires a great deal of energy. Consequently a hydraulic cylinder which effects this movement also requires a significant part of the hydraulic energy delivered by the tractor.

The object of the invention is to provide a silage cutter whose hydraulic drive system, which can be connected to the pump means of the tractor, operates efficiently, so that relatively little energy is used for driving the main blade and for driving the other components of the silage cutter.

In order to accomplish that objective the silage cutter is driven by supplying hydraulic fluid to said cylinder assembly, and the pump chamber comprises an operative cross-sectional area which is smaller than the operative cross-sectional area of the cylinder assembly, by means of which pump chamber hydraulic fluid is pumped to a hydraulic side cylinder in order to drive the side blade. As a result of this the distribution of the hydraulic energy to the various components to be driven (main blade and side blades) of the silage cutter takes place via the hydraulic cylinder assembly, which drives the component that requires the most hydraulic energy, namely the main blade, itself. In this manner it is possible to drive the various components of the silage cutter with a minimum of energy loss, whereby the various components are only supplied with the amount of hydraulic energy which the component in question actually requires.

According to another aspect of the invention the cylinder assembly is provided with two single-action hydraulic cylinders, whereby each cylinder drives the main blade in one direction. The two pistons of the two single-action cylinders are thereby mechanically interconnected by the main blade, as a result of which they are interconnected in series.

According to another aspect of the invention the cylinder assembly comprises two single-action hydraulic cylinders, which each have a pump chamber which is positioned co-axially round the piston rod. On the one side of the piston is the cylinder space for driving the main blade, which cylinder space has an operative cross-sectional area which is equal to the cross-sectional area of the piston, whilst the pump chamber on the other side of the piston has a smaller cross-sectional area, because it surrounds the piston rod.

If two side boards are present on either side of the cutting board, each blade is according to another aspect of the invention driven by a side cylinder, whereby the side cylinders are interconnected in series. The cylinder assembly may thereby comprise two substantially identical pump chambers, which operate in opposite directions and which form a closed hydraulic circuit with the side cylinders, or, if only one side cylinder is provided, with the side cylinder. which form a closed hydraulic circuit with the side cylinders, or, if only one side cylinder is provided, with the side cylinder. Each of said pump chambers thereby provides the movement of the side blade or the side blades in one direction, so that an alternating pumping action of the two pump chambers results in a reciprocating movement of the side blade or the side blades. Since the operation of the pump chambers takes place synchronously with the movement of the cylinder assembly, the movements of the main blade and the side blade or the side blades will likewise take place synchronously. By using a closed hydraulic circuit it is ensured that operation takes place synchronously and also that a complete stroke is made during the various reciprocating movements.

According to another aspect of the invention the cylinder assembly comprises two single-action hydraulic cylinders, which each have a pump chamber which is positioned coaxially within said piston rod and which is capable of pumping hydraulic fluid to a hydraulic control mechanism for moving the cutting board in substantially vertical direction. By providing a pump chamber within the piston rod it is possible to obtain a compact construction.

According to another aspect of the invention the side cylinder is constructed in such a manner that it comprises a cylinder housing with two cylinder spaces being in line and being positioned coaxially with respect to each other, in which two coaxial pistons are provided whose piston rods extend to outside the cylinder housing on both sides. The cylinder housing may be secured to the side board thereby, whilst the two piston rods are mounted on the side blade or clamped down.

In a preferred embodiment of the invention the side blades are positioned in such a manner that they substantially cut in the same horizontal plane as the main blade, whereby the cut of the side blade overlaps that of the main blade. The difference in height of the main blade and the side blade may be a few centimetres thereby, which difference is covered by the term "substantially". For an arrangement of this kind it is advantageous when the side blades are driven hydraulically, because this provides more freedom for placing the side blade. The blades may or may not have a stationary counter blade, that is, a blade part against which the blade butts and with which said blade co-operates. In the case that a side blade co-operates with a stationary blade part, said side blade is preferably positioned on the inner side of the cutting board, and the main blade and the cutting board are provided with a recess, through which the side blade can extend.

The invention furthermore relates to a method for driving a silage cutter provided with a cutting board comprising a main blade which is capable of reciprocating movement along the bottom edge and with a side board which extends substantially perpendicularly to the cutting board on at least one side, said side board comprising a side blade which is capable of reciprocating movement along the bottom edge, whereby said main blade is driven by means of a hydraulic cylinder assembly, which is provided with a pump chamber, by means of which pump chamber hydraulic fluid is pumped to a hydraulic side cylinder for driving the side blade, whereby hydraulic fluid is directly supplied to said cylinder assembly, and that hydraulic fluid is supplied to the hydraulic side cylinder by the pump chamber comprising an operative cross-sectional area which is smaller than the operative cross-sectional area of the cylinder assembly.

The invention also relates to a hydraulic drive system for a silage cutter provided with a cutting board comprising a main blade which is capable of reciprocating movement along the bottom edge and a side board which extends substantially perpendicularly to the cutting board on at least one side, said side board comprising a side blade which is capable of reciprocating movement along the bottom edge, the system comprising a hydraulic cylinder assembly for driving said main blade and a hydraulic side cylinder for driving a side blade, the cylinder assembly being provided with a pump chamber, by means of which pump chamber hydraulic fluid is pumped to the hydraulic side cylinder, whereby hydraulic fluid can be supplied to said cylinder assembly, and whereby the pump chamber comprises an operative cross-sectional area which is smaller than the operative cross-sectional area of the cylinder assembly.

Further aspects and preferred embodiments of the invention, which may be used both separately and in combination with each other, are described hereafter by means of an embodiment and are defined in the claims.

In order to more fully explain the invention an embodiment of the hydraulic drive system of a silage cutter will be described hereafter with reference to the drawing.
Figure 1 schematically shows the drive system of a main blade and two side blades; and
Figure 2 schematically shows part of the hydraulic system.

The Figures are merely schematic representations, usual and generally known components and parts that do not contribute towards a better understanding of the invention have been left out.

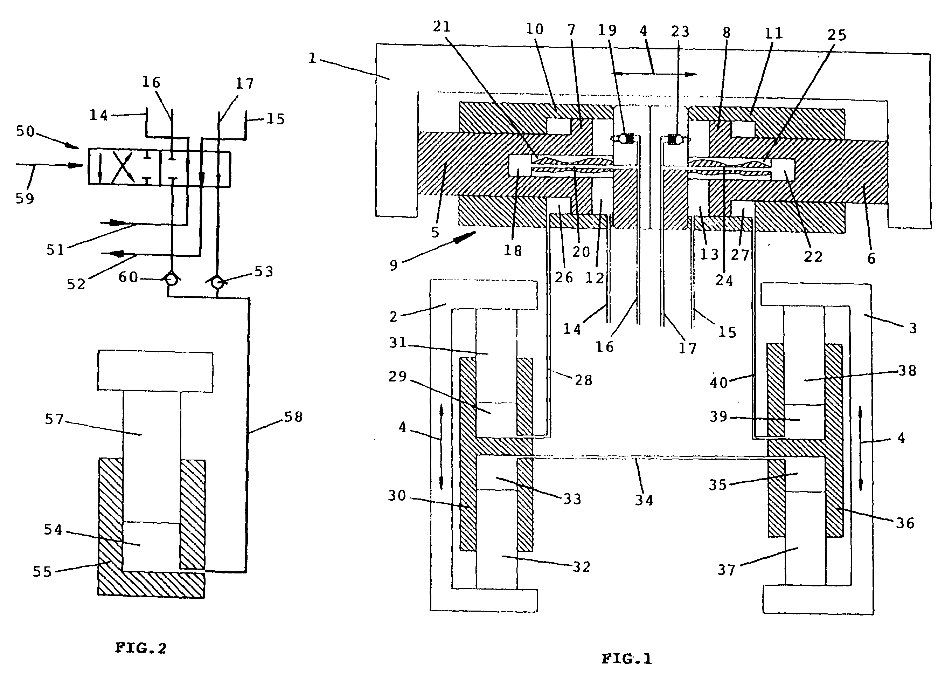

Figure 1 schematically shows a main blade 1 and two side blades 2, 3, whose reciprocating movement is indicated by arrows 4. Main blade 1 is connected to piston 7 and piston 8 of the hydraulic cylinder assembly 9 by means of piston rod 5 and piston rod 6 respectively.

Cylinder assembly 9 is substantially built up of two cylinders 10, 11, in which pistons 7, 8 are provided, which two cylinders 10, 11 are provided in line (coaxially) and in mirror image with respect to each other. Cylinder 10 comprises a first cylinder space 12 and cylinder 11 comprises a first cylinder space 13.

Main blade 1 is substantially moved by alternately supplying hydraulic fluid to cylinder space 13 via pipe 14 and to cylinder space 13 via pipe 15. When main blade 1 moves to the left, pipe 14 is connected to the fluid supply under pressure from the tractor, and pipe 15 is connected to the return pipe for fluid to the tractor. The control system for this, which will be explained with reference to Figure 2, also takes care of it that pipe 16 is closed and that pipe 17 is connected to a hydraulic cylinder 55 (Figure 2), which effects the vertical downward movement of the cutting board. When main blade 1 moves to the right, pipe 15 is connected to the fluid supply and pipe 14 is connected to the return pipe, pipe 17 is closed and pipe 16 is connected to hydraulic cylinder 55.

The entire cross-sectional area of cylinder 10 is utilized for effecting the force to the left by means of fluid supply via pipe 14, because the fluid pressure supplied is not only present in the annular first cylinder space 12, but also in the centrally located second cylinder space 18. The fluid in the second cylinder space 18 is supplied from the first cylinder space 12 via non-return valve 19 and hydraulic pipe 20, which hydraulic pipe is provided in a secondary piston 21, which is positioned coaxially within piston 7 and piston rod 5. In a corresponding manner cylinder 11 is provided with a second cylinder space 22, into which fluid may flow from cylinder space 13, via non-return valve 23 and pipe 24 provided through secondary piston 25, during the movement of main blade 1 to the right.

During the above-described movement to the left of main blade 1, caused by fluid pressure in the first cylinder space 12 and the second cylinder space 18, piston 8 and piston rod 6 likewise move to the left, whereby fluid from first cylinder space 13 can flow out to the return pipe via pipe 15 without impediment, whilst fluid will flow under pressure form second cylinder space 22, which functions as a pump chamber at that moment, to control cylinder 55 (Figure 2) via pipe 17, in order to effect the downward movement of the cutting board. Non-return valve 23 thereby prevents said fluid from flowing back from the second cylinder space 22, which functions as a pump chamber, to first cylinder space 13, where the hydraulic pressure has fallen out. During the movement of main blade 1 to the right fluid is pumped from second cylinder space 18 to cylinder 55 via pipe 16 in a corresponding manner.

Cylinder 10 is furthermore provided with an annular pump chamber 26, and cylinder 11 is provided with an annular pump chamber 27, which pump chambers 26, 27 constitute the drive mechanism for moving the side blades 2, 3.

During the above-described movement to the left of main blade 1, hydraulic fluid is supplied from pump chamber 26, via pipe 28, to cylinder space 29 in the double-action hydraulic cylinder 30 of side blade 2. The fluid being supplied causes piston 31 to move upwards (seen in Figure 1), as a result of which side blade 2 as well as the other piston 32 of hydraulic side cylinder 30 are moved upwards. Fluid is thereby displaced from cylinder space 33 of side cylinder 30 via pipe 34 to cylinder space 35 of side cylinder 36, which drives side blade 3. Piston 37 will move downwards and take side blade 3 along, as a result of which piston 38 will also move downwards and fluid will flow from cylinder space 39 to pump chamber 27 of cylinder 11 via pipe 40.

In practice cylinders 10, 11 and cylinder assembly 9 will lie in a horizontal plane, whereby side blades 2, 3 are not moved upwards and downwards, but forwards and backwards.

Now that the operation of the hydraulic components of Figure 1 has been described by means of a movement of main blade 1 to the left, it will be apparent that the direction of main blade 1 and that of side blades 2, 3 are reversed when hydraulic fluid is supplied under working pressure via pipe 15, and pipe 14 is connected to the return pipe to the tractor. Pipe 17 is closed thereby and pipe 16 is connected to the control cylinder 55 for the downward movement of the cutting board.

As is apparent from Figure 1, the drive for the side blades 2, 3 forms a closed hydraulic circuit consisting of pump chambers 26, 27, pipes 28, 34, 40 and cylinder spaces 29, 33, 35, 39. In this closed circuit the two double-action side cylinders 30, 36 for the side blades are interconnected in series.

Figure 2 shows a simplified diagram of the hydraulic control of the drive system, wherein control valve 50 functions to control the hydraulic drive system shown in Figure 1, whilst also showing, schematically, the hydraulic control cylinder 55 for driving the downward movement of the cutting board when the components shown in Figure 1 are in operation.

The hydraulic pipes 14, 15, 16 and 17 in Figure 2 are connected to the hydraulic pipes in Figure 1, which are indicated by the same reference numerals. Control valve 50 has two positions and is shown in Figure 2 in the position in which main blade 1 in Figure 1 moves to the left. Pipe 51, which is connected to the fluid supply from the tractor, is thereby connected to pipe 14, whilst pipe 17 is connected to pipe 52, which is connected to the fluid discharge (return pipe) to the tractor. Because main blade 1 (Figure 1) moves to the left, fluid is pumped from the second cylinder space 22, via pipe 17, non-return valve 53 and pipe 58, to cylinder space 54 of cylinder 55 for controlling the downward movement of the cutting board. Piston 57 will move upwards thereby. Furthermore fluid can flow from cylinder space 13 of cylinder assembly 9 (Figure 1) to the return pipe 52 via control valve 50.

When the main blade 1 has reached the extreme left-hand position, control valve 50 must move to the right as indicated by arrow 59. In the present embodiment this extreme position is detected because piston 8 (Figure 1) moves the valve disc of non-return valve 23 slightly to the left, via a bar-shaped part of the valve disc extending to within cylinder space 13, as a result of which pipe 17 is connected to cylinder space 13, which causes the hydraulic pressure in pipe 17 to fall out. This pressure drop is detected by means not shown, which means actuate control valve 50, and that in such a manner that control valve 50 moves to the right.

It will be apparent that main blade 1 will move to the right as long as control valve 50 is in the right-hand position, which right-hand position is left again after a pressure drop in pipe 14 is detected, because piston 7 will move the valve disc of non-return valve 19.

In the right-hand position of control valve 50 fluid is pumped from cylinder space 18 (Figure 1), via non-return valve 60 and pipe 58, to cylinder space 54 of cylinder 55. Hydraulic control cylinder 55 causes a certain downward movement of the cutting board with every movement of main blade 1, therefore.

As already said before, Figure 2 merely shows a simplified control diagram, components which do not contribute towards a better understanding of the invention have been left out. Thus the control mechanism for moving the cutting board upwards and downwards at a relatively great velocity (the so-called high-speed operation) is not shown, for example.

## Claims

1. A silage cutter with hydraulic drive and provided with a cutting board comprising a main blade (1) which is capable of reciprocating movement along the bottom edge and a side board which extends substantially perpendicularly to the cutting board on at least one side, said side board comprising a side blade (2,3) which is capable of reciprocating movement along the bottom edge, whereby said main blade (1) is driven by means of a hydraulic cylinder assembly (9), which is provided with a pump chamber (26,27), by means of which pump chamber (26,27) hydraulic fluid is pumped to a hydraulic side cylinder (30,32) for driving the side blade (2,3), **characterized in that** the silage cutter is driven by supplying hydraulic fluid to said cylinder assembly (9), and that the pump chamber (26,27) comprises an operative cross-sectional area which is smaller than the operative cross-sectional area of the cylinder assembly (9).

2. A silage cutter according to claim 1, **characterized in that** said cylinder assembly (9) is provided with two single-action hydraulic cylinders (10,11), whereby each cylinder drives the main blade (1) in one direction.

3. A silage cutter according to claim 1 or 2, **characterized in that** said cylinder assembly (9) comprises two single-action hydraulic cylinders (10,11), which each have a pump chamber (26,27) which is positioned co-axially round the piston rod (5,6).

4. A silage cutter according to any one of the preceding claims, **characterized in that** two side boards are present on either side of the cutting board, each side board being provided with a side blade (2,3) which is driven by a side cylinder (30,36), whereby the side cylinders are interconnected in series.

5. A silage cutter according to any one of the preceding claims, **characterized in that** said cylinder assembly (9) is provided with two substantially identical pump chambers (26,27) which operate in opposite directions and which form a closed hydraulic circuit with the side cylinder (30,36), or, if more than one side cylinder is provided, with the side cylinders.

6. A silage cutter according to any one of the preceding claims, **characterized in that** said cylinder assembly (9) comprises two single-action hydraulic cylinders (10,11), which each have a second space (18,22) which is positioned coaxially within said piston rod (5,6) and which is capable of pumping hydraulic fluid to a hydraulic control mechanism for moving the cutting board in substantially vertical direction.

7. A silage cutter according to any one of the preceding claims, **characterized in that** the side cylinder (30,36), or, if more than one side cylinder is provided, the side cylinders (30,36) comprise a cylinder housing with two cylinder spaces (29,33;39,35) being in line and being positioned coaxially with respect to each other, in which two coaxial pistons (31,32;38,37) are provided whose piston rods extend to outside the cylinder housing on both sides.

8. A silage cutter according to any one of the preceding claims, **characterized in that** the side blade (2,3) co-operates with a stationary blade part, whereby said side blade (2,3) is positioned on the inner side of the cutting board, and that the main blade (1) is provided with a recess, through which the side blade can extend.

9. A silage cutter according to any one of the preceding claims, **characterized in that** the side blade (2,3) or the side blades are positioned in such a manner that they substantially cut in the same horizontal plane as the main blade (1), whereby the cut of the side blade (2,3) overlaps that of the main blade (1).

10. A method for driving a silage cutter provided with a cutting board comprising a main blade (1) which is capable of reciprocating movement along the bottom edge and with a side board which extends substantially perpendicularly to the cutting board on at least one side, said side board comprising a side blade (2,3) which is capable of reciprocating movement along the bottom edge, whereby said main blade (1) is driven by means of a hydraulic cylinder assembly (9), which is provided with a pump chamber (26,27), by means of which pump chamber (26,27) hydraulic fluid is pumped to a hydraulic side cylinder (30,32) for driving the side blade (2,3), **characterized in that** hydraulic fluid is directly supplied to said cylinder assembly (9), and that hydraulic fluid is supplied to the hydraulic side cylinder (26,27) by the pump chamber (26,27) comprising an operative cross-sectional area which is smaller than the operative cross-sectional area of the cylinder assembly (9).

11. A method according to claim 10, **characterized in that** fluid is carried to and from the side cylinder(s) (30,36) in a closed circuit by means of two alternately operating pump chambers (26,27) in said cylinder assembly (9).

12. A method according to claim 10 or 11, **characterized in that** fluid is pumped to a hydraulic control mechanism by means of two alternately operating second spaces (18.22) in said cylinder assembly (9) in order to move said cutting board.

13. A method according to claim 12, **characterized in that** the two second spaces (18,22) are each time filled with hydraulic fluid under working pressure, so that the operative cross-sectional area of said second spaces (18,22) is utilized for driving said main blade (1).

14. A hydraulic drive system for a silage cutter provided with a cutting board comprising a main blade (1) which is capable of reciprocating movement along the bottom edge and a side board which extends substantially perpendicularly to the cutting board on at least one side, said side board comprising a side blade (2,3) which is capable of reciprocating movement along the bottom edge, the system comprising a hydraulic cylinder assembly (9) for driving said main blade (1) and a hydraulic side cylinder (30,32) for driving a side blade (2,3), the cylinder assembly (9) being provided with a pump chamber (26,27), by means of which pump chamber (26,27) hydraulic fluid is pumped to the hydraulic side cylinder (30,32), **characterized in that** hydraulic fluid can be supplied to said cylinder assembly (9), and that the pump chamber (26,27) comprises an operative cross-sectional area which is smaller than the operative cross-sectional area of the cylinder assembly (9).

## Patentansprüche

1. Silofutterschneider mit Hydraulikantrieb und mit einer Schneidplatte ausgestattet, die eine Hauptklinge (1) aufweist, die entlang der Unterkante hin- und herbewegbar ist, und mit einer Nebenplatte ausgestattet, die sich im wesentlichen senkrecht zu der Schneidplatte mindestens auf einer Seite erstreckt, wobei die Nebenplatte eine Nebenklinge (2, 3) aufweist, die entlang der Unterkante hinund herbewegbar ist, wobei die Hauptklinge (1) mittels einer Hydraulikzylinderanordnung (9) angetrieben wird, die mit einer Pumpkammer (26, 27) ausgestattet ist, wobei mittels dieser Pumpkammer (26, 27) Hydraulikfluid zu einem Nebenhydraulikzylinder (30, 32) zum Antrieb der Nebenklinge (2, 3) gepumpt wird, **dadurch gekennzeichnet, dass** der Silofutterschneider durch Zufuhr von Hydraulikfluid in die Zylinderanordnung (9) angetrieben wird und dass die Pumpkammer (26, 27) eine Wirkungsquerschnittsfläche aufweist, die kleiner als die Wirkungsquerschnittsfläche der Zylinderanordnung (9) ist.

2. Silofutterschneider nach Anspruch 1, **dadurch gekennzeichnet, dass** die Zylinderanordnung (9) mit zwei einfachwirkenden Hydraulikzylindern (10, 11) ausgestattet ist, wobei jeder Zylinder die Hauptklinge (1) in eine Richtung antreibt.

3. Silofutterschneider nach Anspruch 1 oder 2, **dadurch gekennzeichnet, dass** die Zylinderanordnung (9) zwei einfachwirkende Hydraulikzylinder (10, 11) aufweist, von denen jeder eine Pumpkammer (26, 27) hat, die koaxial um die Kolbenstange positioniert ist.

4. Silofutterschneider nach einem der vorangehenden Ansprüche, **dadurch gekennzeichnet, dass** zwei Nebenplatten an beiden Seiten der Schneidplatte vorhanden sind, wobei jede Nebenplatte mit einer Nebenklinge (2, 3) ausgestattet ist, die von einem Nebenzylinder (30, 36) angetrieben wird, wobei die Nebenzylinder in Reihe verbunden sind.

5. Silofutterschneider nach einem der vorangehenden Ansprüche, **dadurch gekennzeichnet, dass** die Zylinderanordnung (9) mit zwei im wesentlichen identischen Pumpkammern (26, 27) ausgestattet ist, die in entgegengesetzten Richtungen wirken und die mit dem Nebenzylinder (30, 36) einen geschlossenen Hydraulikkreislauf bilden oder, wenn mehr als ein Nebenzylinder vorgesehen ist, mit den Nebenzylindern einen geschlossenen Hydraulikkreislauf bilden.

6. Silofutterschneider nach einem der vorangehenden Ansprüche, **dadurch gekennzeichnet, dass** die Zylinderanordnung (9) zwei einfachwirkende Hydraulikzylinder (10, 11) aufweist, von denen jeder einen Sekundärraum (18, 22) aufweist, der koaxial innerhalb der Kolbenstange (5, 6) positioniert ist und der dazu vorgesehen ist, Hydraulikfluid zu einen Hydrauliksteuermechanismus zu pumpen, um die Schneidplatte in im wesentlichen vertikale Richtung zu bewegen.

7. Silofutterschneider nach einem der vorangehenden Ansprüche, **dadurch gekennzeichnet, dass** der Nebenzylinder (30, 36) oder, wenn mehr als ein Zylinder vorgesehen ist, die Nebenzylinder (30, 36) ein Zylindergehäuse mit zwei Zylinderräumen (29, 33; 39, 35) aufweisen, die in einer Reihe und zueinander koaxial positioniert sind und in denen zwei koaxiale Kolben (31, 32; 38, 37) vorgesehen sind, deren Kolbenstangen sich außerhalb des Zylindergehäuses auf beiden Seiten erstrecken.

8. Silofutterschneider nach einem der vorangehenden Ansprüche, **dadurch gekennzeichnet, dass** die Nebenklinge (2, 3) mit einem stationären Klingenteil zusammenwirken, wobei die Nebenklinge (2, 3) auf der Innenseite der Schneidplatte positioniert ist, und dass die Hauptklinge (1) mit einer Aussparung ausgestattet ist, durch welche sich die Nebenklinge erstrecken kann.

9. Silofutterschneider nach einem der vorangehenden Ansprüche, **dadurch gekennzeichnet, dass** die Nebenklinge (2, 3) oder die Nebenklingen derart positioniert sind, dass sie im wesentlichen in der gleichen horizontalen Fläche schneiden wie die Hauptklinge (1), wobei der Schnitt der Nebenklingen (2, 3) den der Hauptklinge (1) überlappt.

10. Verfahren zum Antrieb eines Silofutterschneiders, der mit einer Schneidplatte ausgestattet ist, die eine Hauptklinge (1) aufweist, die entlang der Unterkante hinund herbewegbar ist, und mit einer Nebenplatte ausgestattet ist, die sich im wesentlichen senkrecht zu der Schneidplatte mindestens auf einer Seite erstreckt, wobei die Nebenplatte eine Nebenklinge (2, 3) aufweist, die entlang der Unterkante hin- und herbewegbar ist, wobei die Hauptklinge (1) mittels einer Hydraulikzylinderanordnung (9) angetrieben wird, die mit einer Pumpkammer (26, 27) ausgestattet ist, wobei mittels dieser Pumpkammer (26, 27) Hydraulikfluid zum Nebenhydraulikzylinder (30, 32) zum Antrieb der Nebenklinge (2, 3) gepumpt wird, **dadurch gekennzeichnet, dass** das Hydraulikfluid direkt in der Zylinderanordnung (9) zugeführt wird und dass Hydraulikfluid zum Nebenhydraulikzylinder (26, 27) durch die Pumpkammer (26, 27) geführt wird, die eine Wirkungsquerschnittsfläche aufweist, die kleiner als die Wirkungsquerschnittsfläche der Zylinderanordnung (9) ist.

11. Verfahren nach Anspruch 10, **dadurch gekennzeichnet, dass** Fluid mittels zwei alternierend arbeitender Pumpkammern (26, 27) in der Zylinderanordnung (9) in einem geschlossenen Kreislauf zu den Nebenzylindern (30, 36) hingeführt und von den Nebenzylindern (30, 36) weggeführt wird.

12. Verfahren nach Anspruch 10 oder 11, **dadurch gekennzeichnet, dass** Fluid mittels zwei alternierend arbeitender Sekundärräume (18, 22) in der Zylinderanordnung (9) in einen Hydrauliksteuermechanismus gepumpt wird um die Schneidplatte zu bewegen.

13. Verfahren nach Anspruch 12, **dadurch gekennzeichnet, dass** beide Sekundärräume (18, 22) ständig mit Hydraulikfluid, das unter Betriebsdruck steht, gefüllt sind, so dass die Wirkungsquerschnittsfläche von den Sekundärräumen (18, 22) zum Antrieb von der Hauptklinge (1) verwendet wird.

14. Hydraulikantriebssystem für einen Silofutterschneider, der mit einer Schneidplatte ausgestattet ist, die eine Hauptklinge (1) aufweist, die entlang der Unterkante hinund herbewegbar ist, und mit einer Nebenplatte ausgestattet ist, die sich im wesentlichen senkrecht zur Schneidplatte mindestens auf einer Seite erstreckt, wobei die Nebenplatte eine Nebenklinge (2, 3) aufweist, die entlang der Unterkante hin- und herbewegbar ist, wobei das System eine Hydraulikzylinderanordnung (9) zum Antrieb der Hauptklinge (1) und einen Hydrauliknebenzylinder (30, 32) zum Antrieb der Nebenklingen (2, 3) aufweist, wobei die Zylinderanordnung (9) mit einer Pumpkammer (26, 27) ausgestattet ist, mittels welcher Pumpkammer (26, 27) Hydraulikfluid zu den Nebenzylindern (30, 32) gepumpt wird, **dadurch gekennzeichnet, dass** Hydraulikfluid der Zylinderanordnung (9) zuführbar ist und dass die Pumpkammer (26, 27) eine Wirkungsquerschnittsfläche aufweist, die kleiner als die Wirkungsquerschnittsfläche der Zylinderanordnung (9) ist.

## Revendications

1. Dispositif de coupe pour ensilage comportant un entraînement hydraulique et muni d'une plaque de coupe comprenant une lame principale (1) qui est capable d'un mouvement de va-et-vient le long du bord inférieur et d'une plaque latérale qui s'étend sensiblement perpendiculairement à la plaque de coupe sur au moins un côté, ladite plaque latérale comprenant une lame latérale (2, 3) qui est capable d'un mouvement de va-et-vient le long du bord inférieur, d'où il résulte que ladite lame principale (1) est entraînée au moyen d'un ensemble de vérin hydraulique (9), qui est muni d'une chambre de pompage (26, 27), au moyen de laquelle chambre de pompage (26, 27) un fluide hydraulique est pompé vers un vérin hydraulique latéral (30, 32) en vue d'entraîner la lame latérale (2, 3), **caractérisé en ce que** le dispositif de coupe d'ensilage est entraîné en fournissant un fluide hydraulique audit ensemble de vérin (9), et **en ce que** la chambre de pompage (26, 27) comprend une surface en coupe transversale fonctionnelle qui est plus petite que la surface en coupe transversale fonctionnelle de l'ensemble de vérin (9).

2. Dispositif de coupe d'ensilage selon la revendication 1, **caractérisé en ce que** ledit ensemble de vérin (9) est muni de deux vérins hydrauliques à simple effet (10, 11), d'où il résulte que chaque vérin entraîne la lame principale (1) dans une direction.

3. Dispositif de coupe d'ensilage selon la revendication 1 ou 2, **caractérisé en ce que** ledit ensemble de vérin (9) comprend deux vérins hydrauliques à simple effet (10, 11) qui comportent chacun une chambre de pompage (26, 27) qui est positionnée de façon coaxiale autour de la tige de piston (5, 6).

4. Dispositif de coupe d'ensilage selon l'une quelconque des revendications précédentes, **caractérisé en ce que** deux plaques latérales sont présentes sur chaque côté de la plaque de coupe, chaque plaque latérale étant munie d'une lame latérale (2, 3) qui est entraînée par un vérin latéral (30, 36), d'où il résulte que les vérins latéraux sont reliés mutuellement en série.

5. Dispositif de coupe d'ensilage selon l'une quelconque des revendications précédentes, **caractérisé en ce que** ledit ensemble de vérin (9) est muni de deux chambres de pompage sensiblement identiques (26, 27) qui fonctionnent dans des directions opposées et qui forment un circuit hydraulique fermé avec le vérin latéral (30, 36), ou bien si plus d'un vérin latéral est prévu, avec les vérins latéraux.

6. Dispositif de coupe d'ensilage selon l'une quelconque des revendications précédentes, **caractérisé en ce que** ledit ensemble de vérin (9) comprend deux vérins hydrauliques à simple effet (10, 11), qui comportent chacun un second espace (18, 22) qui est positionné de façon coaxiale à l'intérieur de ladite tige de piston (5, 6) et qui est capable de pomper du fluide hydraulique vers un mécanisme de commande hydraulique en vue de déplacer la plaque de coupe dans une direction sensiblement verticale.

7. Dispositif de coupe d'ensilage selon l'une quelconque des revendications précédentes, **caractérisé en ce que** le vérin latéral (30, 36) ou bien si plus d'un vérin latéral est prévu, les vérins latéraux (30, 36) comprennent un logement de vérin avec deux espaces de vérin (29, 33 ; 39, 35) qui sont alignés et qui sont positionnés de façon coaxiale l'un par rapport à l'autre, où deux pistons coaxiaux (31, 32, ; 38, 37) sont prévus dont les tiges de piston s'étendent vers l'extérieur du logement de vérin sur les deux côtés.

8. Dispositif de coupe d'ensilage selon l'une quelconque des revendications précédentes, **caractérisé en ce que** la lame latérale (2, 3) coopère avec une partie de lame immobile, d'où il résulte que ladite lame latérale (2, 3) est positionnée sur le côté intérieur de la plaque de coupe, et **en ce que** la lame principale (1) est munie d'un évidemment, à travers lequel la lame latérale peut s'étendre.

9. Dispositif de coupe d'ensilage selon l'une quelconque des revendications précédentes, **caractérisé en ce que** la lame latérale (2, 3) ou les lames latérales sont positionnées d'une telle manière qu'elles effectuent une coupe sensiblement dans le même plan horizontal que la lame principale (1), d'où il résulte que la coupe de la lame latérale (2, 3) chevauche celle de la lame principale (1).

10. Procédé destiné à entraîner un dispositif de coupe d'ensilage muni d'une plaque de coupe comprenant une lame principale (1) qui est capable d'un mouvement de va-et-vient le long du bord inférieur et muni d'une plaque latérale qui s'étend sensiblement perpendiculairement à la plaque de coupe sur au moins un côté, ladite plaque latérale comprenant une lame latérale (2, 3) qui est capable d'un mouvement de va-et-vient le long du bord inférieur, d'où il résulte que ladite lame principale (1) est entraînée au moyen d'un ensemble de vérin hydraulique (9), qui est muni d'une chambre de pompage (26, 27), au moyen de laquelle chambre de pompage (26, 27) un fluide hydraulique est pompé vers un vérin latéral hydraulique (30, 32) en vue d'entraîner la lame latérale (2, 3), **caractérisé en ce que** le fluide hydraulique est directement fourni audit ensemble de vérin (9) et **en ce que** le fluide hydraulique est fourni au vérin hydraulique latéral (26, 27) par la chambre de pompage (26, 27) comprenant une surface en section transversale fonctionnelle qui est plus petite que la surface en section transversale fonctionnelle de l'ensemble de vérin (9).

11. Procédé selon la revendication 10, **caractérisé en ce que** du fluide est transporté vers le ou les vérins latéraux (30, 36) et à partir de ceux-ci dans un circuit fermé au moyen de deux chambres de pompage fonctionnant en alternance (26, 27) dans ledit ensemble de vérin (9).

12. Procédé selon la revendication 10 ou 11, **caractérisé en ce que** du fluide est pompé vers un mécanisme de commande hydraulique au moyen de deux seconds espaces fonctionnant en alternance (18, 22) dans ledit ensemble de vérin (9) de manière à déplacer ladite plaque de coupe.

13. Procédé selon la revendication 12, **caractérisé en ce que** les deux seconds espaces (18, 22) sont à chaque fois remplis d'un fluide hydraulique sous pression de fonctionnement de sorte que la surface en section transversale fonctionnelle desdits seconds espaces (18, 22) est utilisée en vue d'entraîner ladite lame principale (1).

14. Système d'entraînement hydraulique destiné à un dispositif de coupe d'ensilage muni d'une plaque de coupe comprenant une lame principale (1) qui est capable d'un mouvement de va-et-vient le long du bord inférieur et d'une plaque latérale qui s'étend sensiblement perpendiculairement à la plaque de coupe sur au moins un côté, ladite plaque latérale comprenant une lame latérale (2, 3) qui est capable d'un mouvement de va-et-vient le long du bord inférieur, le système comprenant un ensemble de vérin hydraulique (9) destiné à entraîner ladite lame principale (1) et un vérin latéral hydraulique (30, 32) destiné à entraîner une lame latérale (2, 3), l'ensemble de vérin (9) étant muni d'une chambre de pompage (26, 27), au moyen de laquelle chambre de pompage (26, 27) du fluide hydraulique est pompé vers le vérin latéral hydraulique (30, 32), **caractérisé en ce que** le fluide hydraulique peut être appliqué audit ensemble de vérin (9) et **en ce que** la chambre de pompage (26, 27) comprend une surface en section transversale fonctionnelle qui est plus petite que la surface en section transversale fonctionnelle de l'ensemble de vérin (9).
